# EUROPÄISCHE PATENTSCHRIFT

(11) **EP 2 548 850 B1**
(45) Veröffentlichungstag und Bekanntmachung des Hinweises auf die Patenterteilung: **03.09.2014**
(21) Anmeldenummer: 12174724.0
(22) Anmeldetag: 03.07.2012
(51) Int. Cl.: C03B 17/04

(54) **Verfahren und Vorrichtung zur bevorzugt kontinuierlichen Herstellung von Glasrohren mit einem vorbestimmten Innenprofil**
Method and device for preferably continuous production of glass tubes with a pre-determined internal profile
Procédé et dispositif de fabrication de préférence continue de tubes de verre à profil intérieur prédéterminé

(30) Priorität: 22.07.2011 DE 102011052067
(43) Veröffentlichungstag der Anmeldung: 23.01.2013
(73) Patentinhaber: Schott AG, 55122 Mainz (DE)
(72) Erfinder: Ziegler, Michael, 95666 Mitterteich (DE); Eichholz, Rainer, 60323 Frankfurt am Main (DE); Zemsch, Erhard, 95666 Mitterteich (DE)
(74) Vertreter: 2K Patentanwälte Blasberg Kewitz & Reichel

(56) Entgegenhaltungen:
- DE-A1-102004 018 148
- FR-E- 38 432
- US-A- 3 063 268

## Beschreibung

Die vorliegende Anmeldung beansprucht die Priorität der Deutschen Patentanmeldung Nr. 10 2011 052 067.8 "Verfahren und Vorrichtung zur bevorzugt kontinuierlichen Herstellung von Glasrohren mit einem vorbestimmten Innenprofil", angemeldet am 22.07.2011.

### Gebiet der Erfindung

Die vorliegende Erfindung betrifft ein Verfahren und eine Vorrichtung zur kontinuierlichen Herstellung von kalibrierten runden oder profilierten Glasrohren, insbesondere von kalibrierten runden oder profilierten Glasrohren mit einem vorgegebenen Innenprofil und/oder einem vorgegebenen Außenprofil.

### Hintergrund der Erfindung

Glasrohre der vorgenannten Art mit Längen von bis zu mehreren Metern werden als Ausgangsmaterial zur Herstellung verschiedenster Glaskörper benötigt, beispielsweise zur Herstellung von Flaschen und Behältern, von röhrenförmigen Abdeckungen für Leuchtmittel und zur Herstellung von Leuchtmittel-Rohren in der Lichttechnik. Dabei besteht einerseits die Anforderung, dass solche Glasrohre möglichst kostengünstig hergestellt werden. Andererseits besteht bei vielen Anwendungen, beispielsweise in der Lichttechnik, eine Nachfrage nach Glasrohren mit präzise gefertigten Innenprofilen, beispielsweise vorgegeben durch technische Spezifikationen in der jeweiligen Anwendung.

Bei der Herstellung von Glasrohren unterscheidet man prinzipiell zwischen diskontinuierlichen und kontinuierlichen Herstellungsverfahren. Wegen der zumeist grundlegend anderen Verfahrensparameter sind bei diskontinuierlichen Herstellungsverfahren angewendete Prinzipien nicht oder jedenfalls nicht ohne weiteres auf kontinuierliche Herstellungsverfahren übertragbar, sodass diese dem Fachmann nicht als Anregung zur Verbesserung von kontinuierlichen Herstellungsverfahren dienen werden.

DE 497 649 offenbart ein Verfahren und eine Vorrichtung zum Ziehen von Glasrohren nach dem so genannten Danner-Verfahren mit rundem oder nicht-rundem Innenprofil. Bei dem Verfahren wird ein flüssiges Glas außen auf einen geneigt angeordneten, sich drehenden rohrförmigen Körper geleitet und an dessen unterem Ende als Rohr abgezogen. Bei diesem Verfahren wird das Innenprofil des abgezogenen Glasrohrs durch das Außenprofil des rohrförmigen Körpers an dessen unterem Ende festgelegt. Zur Herstellung von Glasrohren mit nicht-rundem Innenprofil kann das untere Ende des rohrförmigen Körpers auch eine von der Kreisform abweichende Außenkontur aufweisen. Das Innenprofil der so hergestellten Glasrohre weist vergleichsweise hohe Toleranzen auf. Auch die Kantenradien von Glasrohren mit nicht-runden Profilen sind vergleichsweise groß. Somit wird dieses Verfahren den heutigen Anforderungen an die Präzision und die Toleranzen von kalibrierten runden oder profilierten Glasrohren häufig nicht mehr gerecht.

US 2,009,793 offenbart das so genannte Vello-Verfahren zur kontinuierlichen Herstellung von Glasrohren mit einem kreisrunden Innenprofil. Ein im Wesentlichen konischer Formkörper ist unterhalb einer Austrittsöffnung einer als Aufnahme für die Glasschmelze dienenden Schmelzrinne angeordnet, und zwar konzentrisch zu dem Auslaufstück der Schmelzrinne. Durch den ringförmigen Spalt zwischen dem Formstück und dem Auslaufstück wird die austretende Glasschmelze von einer Ziehvorrichtung abgezogen, sodass sich ein Glasrohr mit einem kreisrunden Innenprofil, das im Wesentlichen durch die Außenkontur des Formkörpers vorgegeben wird, ausbildet. Stromabwärts von dem Formstück wird der noch verformbare, rohrförmige Glaskörper mittels einer Ziehvorrichtung weiter gestreckt, bis sich dieser schließlich unter die Erweichungstemperatur abgekühlt hat. Der Innendurchmesser und die Wandstärke der Glasrohre wird durch die Abmessungen des Ringspalts zwischen dem Formstück und dem Auslaufstück der Schmelzrinne, durch die Temperatur der austretenden Glasschmelze, die Temperaturverhältnisse stromabwärts der Austrittsöffnung und durch die Zugkraft bzw. Ziehgeschwindigkeit der Ziehvorrichtung festgelegt. Das Auffinden geeigneter Parameterbereiche zur Herstellung von Glasrohren mit unterschiedlichen Profilen ist vergleichsweise aufwendig und erfordert viel Erfahrung, was eine vollständige Automatisierung des Verfahrens jedenfalls aufwendig macht. Ein Umrüsten des Schmelzofens zur Herstellung von Glasrohren mit anderen Profilen ist vergleichsweise aufwendig. Nach dem Vello-Verfahren hergestellte Glasrohre weisen dennoch Toleranzen auf, die heutigen Anwendungen zunehmend nicht mehr gerecht werden.

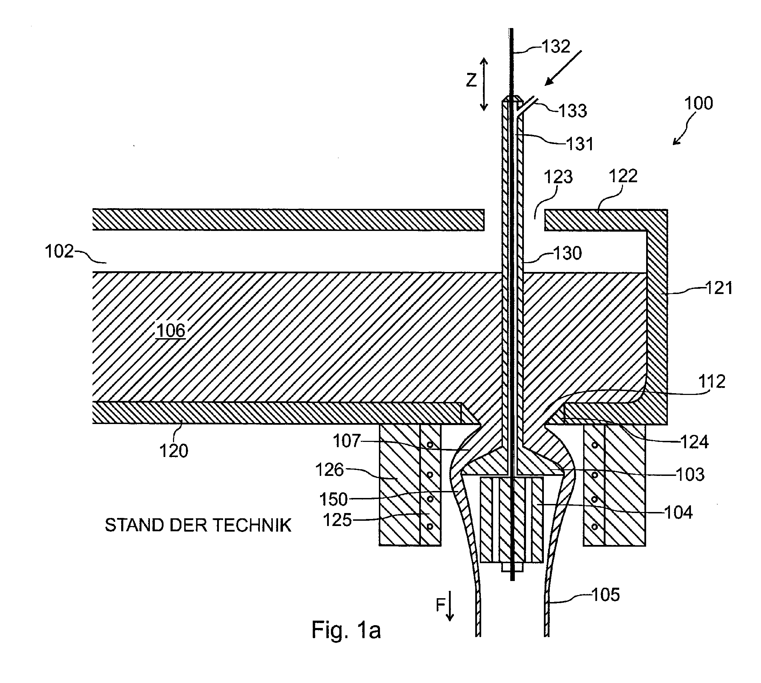

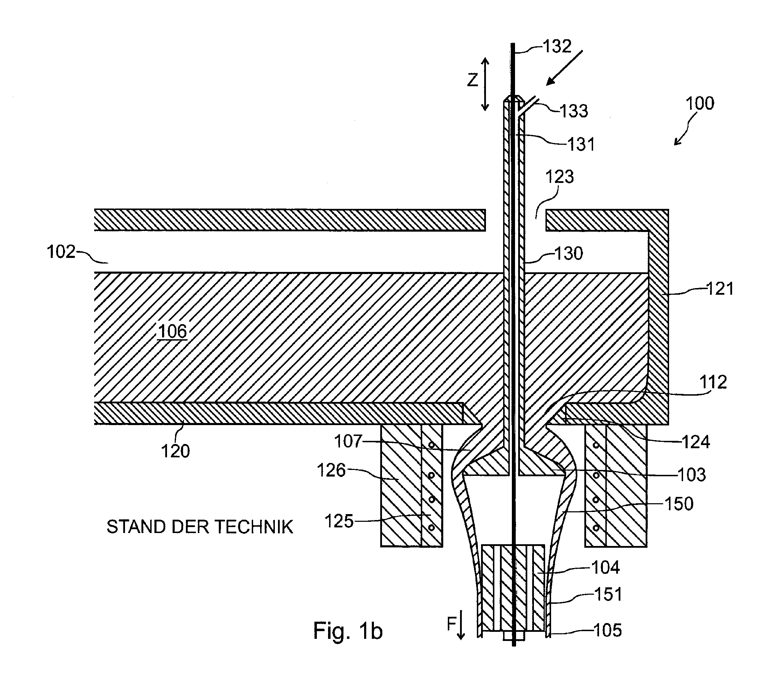

Die Fig. 1a zeigt in einer schematischen Schnittansicht eine Vorrichtung zur Herstellung von kalibrierten runden oder profilierten Glasrohren gemäß der Deutschen Patentschrift DE 10 2004 018 148 B4 der Anmelderin. Diese weist einen Formkörper 103 in Gestalt einer Ziehnadel sowie einen stromabwärts axial längsverschieblich angeordneten Profilformungskörper 104 zum Formen des Innenprofils des Glasrohrs 105. Während die Fig. 1a die Vorrichtung 100 in einer Stellung darstellt, in der der Profilformungskörper 104 nahezu an dem Formkörper 103 anliegt, zeigt die Fig. 1b diese Vorrichtung 100 in einer Stellung, in welcher der Profilformungskörper 104 beabstandet zu dem Formkörper 103 angeordnet ist. Bei dieser Vorrichtung 100 kann die Formung der heißen und noch verformbaren Ziehzwiebel 150 und die weitere Profilierung derselben zu dem kalibrierten runden oder profilierten Glasrohr 105 in unterschiedlichen Zonen erfolgen, sodass die Prozessparameter des Ziehverfahrens variabel und kontrolliert vorgegeben werden können. Dabei kann der Profilformungskörper auch durch einen anderen geeigneten Profilformungskörper ausgetauscht werden, um das Innenprofil des herzustellenden Glasrohrs 105 zu variieren.

Zum Austauschen des Profilformungskörpers 104 durch einen Profilformungskörper mit einem anderen Außenprofil wird zunächst der Glasschmelzenfluss 107 aus dem Auslaufring 124 durch Anheben des Formkörpers 103 und Verschließen der Austrittsöffnung 112 der Schmelzrinne 102 abgestoppt. Anschließend wird der Profilformungskörper 104 von dem Gestänge 132 abgenommen und ein neuer Profilformungskörper 104 an dem Gestänge 132 befestigt. Oder das Gestänge 132 wird komplett mit dem daran befestigten Profilformungskörper 104 ausgetauscht. Anschließend wird die Austrittsöffnung 112 der Schmelzrinne 102 durch Absenken des Formkörpers 103 wieder ausreichend geöffnet und der Prozess wieder angefahren. Die Glasschmelze 106 wird dabei über den Formkörper 103 mit einer vorgegebenen Ziehgeschwindigkeit abgezogen. Anschließend wird die Höhenlage des Profilformungskörpers 104 durch axiales Verschieben des Gestänges 132 geeignet verändert, bis geeignete Parameter für die Stellung des Profilformungskörpers 104 relativ zu dem Formkörper 103, die Temperatur und die Abzugsgeschwindigkeit gefunden sind, um ein Glasrohr 105 mit einem vorgegebenen Innenprofil herzustellen. Über die Temperatur, die Abzugsgeschwindigkeit, den Durchsatz und die Stellung des Formkörpers 103 kann insbesondere auch die Wandstärke des Glasrohrs 105 beeinflusst werden.

Zum Setzen des Profilformungskörpers muss bei diesem Verfahren zunächst der Glasfluss mit Hilfe des Formkörpers vollständig gestoppt werden. Dies führt häufig zu einem Verkleben des Auslaufrings 124 mit Glas und dadurch später während der Produktion zu Ausfällen und/oder Chargen minderer Qualität durch an der Rohraußenfläche herab abtropfendes Glas. Zusätzlich ist diese Vorgehensweise zum Wechsel des Profilformungskörpers auch mit einem nicht unerheblichen Unfallrisiko behaftet, weil im Bereich unterhalb der Austrittsöffnung 112 hantiert werden muss, bei der stets die Gefahr eines plötzlichen Austritts der Glasschmelze besteht.

FR38432 E offenbart ein Verfahren zur Herstellung von Glasrohren, bei dem eine Glasschmelze aus einer Öffnung am Boden einer Schmelzenzuführung austritt und über eine Ziehnadel abgezogen wird. Nachgeordnet zur Ziehnadel ist ein Profilformungskörper vorgesehen, welcher das Innenprofil des Glasrohrs festlegt. Über einen Schaft, der den Profilformungskörper hält, kann ein Überdruck an den Innenraum der Ziehzwiebel angelegt werden, der über die Ziehnadel wieder abgelassen werden kann. Dadurch kann die Formgestaltung der Ziehzwiebel beeinflusst werden. Zum Setzen oder zum Austausch des Profilformungskörpers muss der Zufluss der Glasschmelze unterbrochen werden.

### Zusammenfassung der Erfindung

Aufgabe der vorliegenden Erfindung ist es ausgehend von der DE 10 2004 018 148 B4 ein verbessertes Verfahren zur bevorzugt kontinuierlichen Herstellung von Glasrohren mit einem vorbestimmten Innenprofil nach dem Vello- oder Down-Draw-Verfahren bereitzustellen, womit der Profilformungskörper in einfacher Weise zuverlässig in seine Betriebslage gebracht werden kann. Gemäß einem weiteren Gesichtspunkt der vorliegenden Erfindung soll ferner eine entsprechende Vorrichtung zur bevorzugt kontinuierlichen Herstellung von Glasrohren bereitgestellt werden.

Diese Aufgaben werden erfindungsgemäß durch ein Verfahren und eine Vorrichtung mit den Merkmalen nach Anspruch 1 bzw. 10 gelöst. Weitere vorteilhafte Ausführungsformen sind Gegenstand der rückbezogenen Unteransprüche.

Ausgehend von einem Verfahren gemäß der gattungsbildenden DE 10 2004 018 148 B4 der Anmelderin, bei dem der dem Formkörper nachgeordnete Profilformungskörper bevorzugt beabstandet und konzentrisch zu dem Formkörper gehalten wird und bei dem der Abstand zwischen dem Formkörper und dem Profilformungskörper während des Verfahrens vorzugsweise variiert werden kann, beispielsweise um die Wandstärke des Glasrohrs zu verändern, wird erfindungsgemäß eine Vorgehensweise gewählt, um den Profilformungskörper zuverlässiger und sicherer in der Betriebslage anzuordnen.

Hierzu wird gemäß einer ersten Ausführungsform der Profilformungskörper, von unterhalb des Formkörpers her, durch den Innenraum des Glasrohrs, bis zum Erreichen der gewünschten Betriebslage, in den Innenraum des Glasrohrs eingeführt und axial verfahren. Hierzu kann insbesondere von einem Boden oder Kellerraum unterhalb der Austrittsöffnung her operiert werden, welcher weit genug beabstandet zur Austrittsöffnung ist, so dass der Profilformungskörper hier geeignet vorpositioniert werden kann, insbesondere fluchtend und mittig zum Innenprofil des gerade in der Herstellung befindlichen Glasrohrs. Zum Einführen des Profilformungskörpers in den Innenraum des gerade in der Herstellung befindlichen Glasrohrs und zum geeigneten Positionieren des Profilformungskörpers kann in einem Bereich unterhalb der Ziehzwiebel, in welchem das gerade in der Herstellung befindliche Glasrohr bereits ausreichend abgekühlt ist, eine Schneidevorrichtung vorgesehen sein, um in diesem Bereich das Glasrohr geeignet abzulängen und so einen frei zugänglichen Bereich unterhalb des Formkörpers zu schaffen, nämlich beispielsweise oberhalb des vorgenannten Kellerbodens. Auf dem Kellerboden kann nun der Profilformungskörper geeignet positioniert werden. Anschließend kann der Profilformungskörper in den Innenraum des weiter kontinuierlich hergestellten Glasrohrs bis in den Bereich der Ziehzwiebel eingeführt werden und unter einem geeigneten Abstand zum Formkörper positioniert werden, um eine geeignete Betriebslage einzunehmen. Um ein problemloses Einführen des Profilformungskörpers in den Innenraum des Glasrohrs zu ermöglichen, wird dieses vor dem Einführen des Profilformungskörpers bevorzugt geeignet aufgeweitet, beispielsweise durch Anlegen eines Unterdrucks von der Außenseite der Ziehzwiebel und/oder des noch plastisch verformbaren Glasrohrstrangs, durch geeignete Wahl der Prozessparameter, insbesondere der Abzugsgeschwindigkeit oder vergleichbare Maßnahmen.

Diese Positionierung und dieses Einführen kann gefahrlos von außerhalb des Herstellungsbereichs her ausgeführt und kontrolliert werden, so dass das Unfallrisiko bei dem erfindungsgemäßen Verfahren minimiert ist. Ferner braucht der Glasschmelzenzufluss nicht unterbrochen werden, denn der Profilformungskörper kann während einer laufenden Produktion gesetzt und/oder gewechselt werden. Glasrohre mit einem ungeeigneten Innenprofil, die während des Setzens und/oder Wechselns des Profilformungskörpers ausgebildet wurden, können durch einfaches Ablängen aussortiert werden. Bei dieser Vorgehensweise wird der Prozess somit im Wesentlichen nicht unterbrochen, so dass ein mühsames und aufwendiges Wiederhochfahren der Anlage vermieden werden kann, insbesondere ein störendes Abtropfen von Glastropfen an der Rohraußenoberfläche zuverlässig unterbunden werden kann.

Zum Anheben des Profilformungskörpers kann dabei ein Gestänge, eine Kette oder ein Zugseil durch eine Innenbohrung eines den Formkörper tragenden Schafts bis zu dem vorpositionierten Profilformungskörper hin abgesenkt werden, dann mit diesem verbunden werden und anschließend wieder bis in die Betriebslage angehoben werden. Selbstverständlich kann alternativ ein Gestänge auch den Profilformungskörper von unten her, beispielsweise aus dem Kellerboden austretend, anheben, um den Profilformungskörper bis in die Betriebslage anzuheben.

Gemäß einer zweiten Ausführungsform ist die Öffnungsweite der Innenbohrung des den Formkörper tragenden Schafts ausreichend groß, so dass der Profilformungskörper auch von oberhalb her durch die Innenbohrung in den Innenraum der Ziehzwiebel und des Glasrohrs eingeführt werden kann, bis die gewünschte Betriebslage erreicht ist. Bei dieser Ausführungsform kann der Profilformungskörper auch permanent mit dem Gestänge verbunden sein, wobei es allerdings bevorzugt ist, dass der Profilformungskörper abnehmbar mit dem Gestänge verbunden ist. Das Gestänge ist bevorzugt ausgelegt, um den Profilformungskörper stabil in seiner Betriebslage zu halten. Das vorgenannte Zugseil oder die Kette können zweckmäßig als Hilfsmittel eingesetzt werden, um den Profilformungskörper hin zu dem als Haltemittel wirkenden Gestänge anzuheben, beispielsweise von dem weit unterhalb des Formkörpers befindlichen Kellerboden der Vorrichtung.

Für ein noch zuverlässigeres Einführen des Profilformungskörpers in den Innenraum des Glasrohrs kann gemäß einer weiteren Ausführungsform der Profilformungskörper zentriert bzw. fluchtend zum Innenraum des Glasrohrs geführt oder gehalten werden, insbesondere solange bis dieser das vordere Ende des nachfließenden Glasrohrstrangs erreicht hat. Hierzu kann eine geeignet zentrierte und/oder zentrierbare Halterung oder Führung den Profilformungskörper halten oder führen. Zu diesem Zweck kann ferner auch eine Geradführung in der Innenbohrung des den Formkörper tragenden Schafts vorgesehen sein, welche das Gestänge bzw. Zugseil mit hinreichend wenig seitlichem Spiel führt, so dass das Gestänge bzw. Zugseil im Wesentlichen nur axial und konzentrisch zur Mittelachse des gerade in der Herstellung befindlichen Glasrohrs geführt ist.

Die vorgenannte Vorgehensweise eignet sich nicht nur zum erstmaligen Anordnen des Profilformungskörpers in der gewünschten Betriebslage, sondern auch zum Austauschen eines gerade verwendeten Profilformungskörpers und Ersetzen durch einen anderen Profilformungskörper mit einem anderen Außenprofil während einer laufenden Glasrohrproduktion.

Um zu gewährleisten, dass der gerade verwendete Profilformungskörper zuverlässig aus dem Innenraum des Glasrohrs herausgeführt werden kann und/oder der neu zu verwendende Profilformungskörper zuverlässig in den Innenraum des Glasrohrs eingeführt werden kann, kann gemäß einer weiteren Ausführungsform das Glasrohr und/oder die Ziehzwiebel zuvor so lange aufgeweitet werden, bis die minimale Innenabmessung des Glasrohrs quer zur Abzugsrichtung des Glasrohrs bzw. die minimale Öffnungsweite des Glasrohrs größer ist als die maximale Außenabmessung des Profilformungskörpers quer zur Abzugsrichtung des Glasrohrs, dieser also im Wesentlichen berührungsfrei in den Innenraum des Glasrohrs und/oder die Ziehzwiebel eingeführt werden kann. Zum Aufweiten des gerade in der Herstellung befindlichen Glasrohrs können dabei die Prozessparameter des Verfahrens geeignet variiert werden, insbesondere die Abziehgeschwindigkeit und die Öffnungsweite der Austrittsöffnung der Schmelzenzuführung, ggf. auch weitere Parameter, insbesondere die Temperatur im Bereich einer die Ziehzwiebel umgebenden Heizmuffel.

Gemäß einer weiteren Ausführungsform kann zum Aufweiten des Glasrohrs im Bereich der Ziehzwiebel auch ein Unterdruck auf der Außenseite des Glasrohrs bzw. der Ziehzwiebel erzeugt werden, und zwar bevorzugt innerhalb einer der Austrittsöffnung unmittelbar nachgeordneten Heizmuffel, welche die Ziehzwiebel umgibt, um deren Temperatur geeignet vorzugeben.

Gemäß einer weiteren Ausführungsform ist der Profilformungskörper drehstarr relativ zu dem Formkörper und der Austrittsöffnung der Schmelzenzuführung gehalten oder geführt, so dass keine Relativverdrehung zwischen Profilformungskörper und dem gerade in der Herstellung befindlichen Glasrohr zu befürchten ist. Dies gewährleistet insbesondere bei nicht-kreisrunden Innenprofilen des Glasrohrs ein zuverlässiges Anordnen des Profilformungskörpers in der gewünschten Betriebslage.

Gemäß einer weiteren Ausführungsform sind in der Betriebslage zumindest zwei Profilformungs-Gegenstücke beabstandet und unter Ausbildung eines Spalts um den Profilformungskörper herum angeordnet, um zusätzlich auch das Außenprofil des Glasrohrs zu formen bzw. zu kalibrieren. Auf diese Weise können erfindungsgemäß Glasrohre mit einem vorbestimmten Innenprofil und Außenprofil ausgebildet werden. Hierzu sind die Profilformungskörper-Gegenstücke bevorzugt symmetrisch um den Profilformungskörper herum angeordnet, insbesondere spiegel- oder punktsymmetrisch bezüglich einer Mittelachse des Profilformungskörpers. Neben einer zuverlässigen Formung des Außenprofils dient eine derartige Anordnung von Profilformungskörper-Gegenstücken zugleich einer weiteren Stabilisierung der Betriebslage des Profilformungskörpers gegen eine unbeabsichtigte Verstellung in Richtung senkrecht zur Abzugsrichtung des Glasrohrs.

Ein weiterer Gesichtspunkt der vorliegenden Erfindung betrifft ferner eine zur Ausführung des vorgenannten Verfahrens ausgelegte Vorrichtung zur bevorzugt kontinuierlichen Herstellung von Glasrohren mit einem vorbestimmten Innenprofil. Zu diesem Zweck ist eine entsprechend ausgelegte Steuereinrichtung vorgesehen, die das Glasherstellungsverfahren geeignet steuert.

### Figurenübersicht

Nachfolgend wird die Erfindung in beispielhafter Weise und unter Bezugnahme auf die beigefügten Zeichnungen beschrieben werden, woraus sich weitere Merkmale, Vorteile und zu lösende Aufgaben ergeben werden. Es zeigen:
- Fig. 1a und 1b: in einer schematischen Schnittansicht eine Vorrichtung zur Herstellung von kalibrierten runden oder profilierten Glasrohren gemäß dem Stand der Technik in zwei unterschiedlichen Stellungen des Profilformungskörpers;
- Fig. 2: in einer schematischen Schnittansicht eine weitere Vorrichtung zur Herstellung von kalibrierten runden oder profilierten Glasrohren gemäß dem Stand der Technik, die zum Ausführen des Verfahrens nach der vorliegenden Erfindung grundsätzlich geeignet ist;
- Fig. 3a bis 3d: eine Vorgehensweise zum Wechsel des Profilformungskörpers bei einer Vorrichtung gemäß der Fig. 2, wobei Einzelheiten der Vorrichtung aus Vereinfachungsgründen weggelassen sind;
- Fig. 4: in einer schematischen Seitenansicht ein bei der Vorrichtung gemäß der Fig. 2 eingesetztes Zugseil oder Zuggestänge mit einem Gewichtskörper;
- Fig. 5: in einer schematischen Schnittansicht den Formkörper und den stromabwärts befindlichen Profilformungskörper bei einer weiteren Ausführungsform der Vorrichtung nach der Fig. 2; und
- Fig. 6: in einer schematischen Schnittansicht den Formkörper und den stromabwärts befindlichen Profilformungskörper bei einer weiteren Ausführungsform der Vorrichtung nach der Fig. 2.

In den Figuren bezeichnen identische Bezugszeichen identische oder im Wesentlichen gleich wirkende Elemente oder Elementgruppen.

### Ausführliche Beschreibung von bevorzugten Ausführungsbeispielen

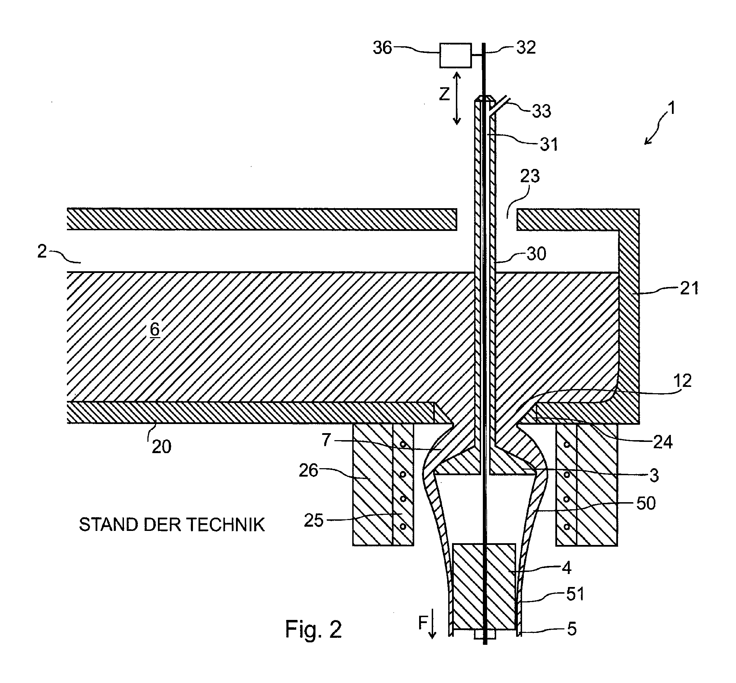

Die in der Fig. 2 gezeigte Vorrichtung 1 weist grundsätzlich einen vergleichbaren Aufbau auf wie die in den Fig. 1a und 1b gezeigte Vorrichtung und ist zum Ausführen des Verfahrens nach der vorliegenden Erfindung geeignet. Deshalb sei der genaue Aufbau und Betrieb dieser Vorrichtung nachfolgend ausführlicher beschrieben, um das Verständnis der vorliegenden Erfindung zu erleichtern.

Gemäß der Fig. 2 umfasst die insgesamt mit 1 bezeichnete Ziehvorrichtung eine als Schmelzenzuführung wirkende Schmelzrinne 2, die von einem Boden 20, einer Seitenwand 21 und einer oberen Abdeckung 22 ausgebildet wird, um darin eine Glasschmelze 6 zuzuführen. Die Schmelzrinne 2 wird von einem nicht dargestellten Schmelzofen kontinuierlich oder quasi-kontinuierlich gespeist und führt der Austrittsöffnung 12 eine geeignet konditionierte Glasschmelze 6 zu. An dem unteren Ende der Schmelzrinne 2 wird von einem Auslaufring 24 eine Austrittsöffnung 12 für die Glasschmelze 6 festgelegt. Gemäß der Fig. 2 verjüngt sich der Auslaufring 24, sodass die Innenkontur des Auslaufrings 24 von einer Kante festgelegt wird. Der Auslaufring 24 kann ein rundes oder ein nicht-rundes Innenprofil aufweisen, beispielsweise ein rechteckförmiges oder elliptisches Profil.

Gemäß der Fig. 2 ist stromabwärts der Austrittsöffnung 12 der Schmelzrinne 2 ein konischer Formkörper 3 angeordnet, der an dem unteren Ende eines im Wesentlichen rohrförmigen Formkörperschafts 30 befestigt oder einstückig mit diesem ausgebildet ist. Wie durch den Doppelpfeil Z angedeutet, kann der Formkörperschaft 30 vertikal auf- und abwärts bewegt werden, um die Austrittsöffnung des Auflaufrings 24 zu verschließen oder die Breite des Ringspalts zwischen dem Formkörper 3 und dem Auslaufring 24 zu variieren, um den Glasschmelzendurchfluss einzustellen. Der Schaft 30 kann außerdem auch in horizontaler (xy) Richtung verstellbar gelagert sein und damit innerhalb des Auslaufrings 24 zentrierbar sein, so dass das Glasrohr eine gleichmässige Wanddicke erhält.

Gemäß der Fig. 2 durchragt das obere Ende des Formkörperschafts 30 die obere Abdeckung, sodass eine nicht dargestellte Verstellvorrichtung mit dem oberen Ende des Formkörper-Schafts 30 zusammenwirken kann, um die Höhenlage des Formkörpers 3 geeignet einzustellen.

Gemäß der Fig. 2 ist stromabwärts, in Richtung der Schwerkraft und der Abzugsrichtung des Glasrohrs 5, ein Profilformungskörper 4 vorgesehen, der austauschbar an dem unteren Ende eines Gestänges oder Zugseils 32 befestigt ist. Der Profilformungskörper 4 ist in der Fig. 2 beabstandet zu dem unteren Ende des Formkörpers 3 angeordnet. Durch die Anlage des unteren Abschnitts der heißen und noch verformbaren Ziehzwiebel 50 in dem mit dem Bezugszeichen 51 bezeichneten Bereich an dem Profilformungskörper 4 kann das Innenprofil des Glasrohrs 5 sehr präzise eingestellt werden.

Gemäß der Fig. 2 ist in dem Formkörperschaft 30 eine axiale Innenbohrung 31 vorgesehen, in welcher das Zuggestänge oder Zugseil 32 aufgenommen ist. Die Innenbohrung 31 verläuft konzentrisch zu dem Formkörper 3 und dem Profilformungskörper 4. Die Innenbohrung 31 ist so ausgebildet, dass das Gestänge oder Zugseil 32 in der Innenbohrung 31 gerade geführt ist, wobei dessen Außenseite zumindest abschnittsweise an der Innenseite der Innenbohrung 31 anliegt, sodass in jeder Höhenlage des Profilformungskörpers 4 der Formkörper 3 und der Profilformungskörper 4 fluchtend zueinander angeordnet sind, also der Profilformungskörper 4 beim Ändern der Höhenlage desselben ausschließlich axial, nicht jedoch radial verstellt wird.

Die Höhenlage des Profilformungskörpers 4 kann von einer Bedienperson manuell durch axiales Verschieben des Gestänges oder Zugseils 32 in der Innenbohrung 31 verstellt werden. Zu diesem Zweck kann die in der Fig. 2 dargestellte mechanische oder elektromotorisch betätigte Höhenverstellvorrichtung 36 auch an dem oberen Ende der Innenbohrung 31 vorgesehen sein, um das Gestänge oder Zugseil 32 axial zu verstellen. Diese Höhenverstellvorrichtung 36 wird von einer elektronischen Steuereinrichtung (nicht dargestellt) geeignet betrieben, um die Prozessparameter geeignet einzustellen. Zum Anzeigen der Höhenlage des Formkörpers 3 und des Profilformungskörpers 4 sind an dem oberen Ende der Ziehvorrichtung 1 mechanische Anzeigen oder Skalen (nicht gezeigt) vorgesehen. Selbstverständlich kann die jeweilige Höhenlage des Formkörpers 3 und des Profilformungskörpers 4 auch von einem Detektor, beispielsweise einer optischen, induktiven oder kapazitiven Abtastvorrichtung, detektiert werden, um auf einem Display angezeigt zu werden.

Gemäß der Fig. 2 ist an dem unteren Ende der Ziehvorrichtung 1 eine zylindrische Heizvorrichtung 25 und eine diese umgebende zylindrische Wärmeisolation 26 vorgesehen, insbesondere in Gestalt einer die Ziehzwiebel eng umgebenden Heizmuffel, um zumindest den Formkörper 3 und bevorzugt sowohl den Formkörper 3 als auch zumindest das obere Ende des Profilformungskörpers 4 zu umgeben, um stromabwärts der Austrittsöffnung der Schmelzrinne 2 definierte Temperaturbedingungen vorzugeben. Selbstverständlich kann die Heizvorrichtung 25 zu diesem Zweck in Längsrichtung mehrere unabhängig voneinander betreibbare Heizzonen beinhalten.

Erfindungsgemäß ist der Profilformungskörper 4 aus einem geeignet hitzebeständigen Material gebildet, das auch bei hohen Temperaturen nicht von der Glasschmelze benetzt wird. Bevorzugt besteht der Profilformungskörper 4 erfindungsgemäß aus einem polierten Graphit oder aus einem anderen nicht-silikatischen Material mit hexagonaler Kristallstruktur. Um eine Riefenbildung auf der Innenseite des Glasrohrs 5 zu vermeiden, kann die Unterkante des Profilformungskörpers 4 angefast oder abgerundet sein. Der Formkörper 3 gemäß der vorliegenden Erfindung kann aus einem hochtemperaturfesten Material bestehen, das mit der Glasschmelze 6 wenig oder gar nicht reagiert, beispielsweise aus einem Edelmetall, wie beispielsweise Platin, aus einer Edelmetalllegierung, beispielsweise einer Platin-Legierung, oder aus einem hoch temperaturfesten Stahl. Wie der Fig. 2 ohne weiteres entnehmbar ist, kann der Formkörper 3 auch innerhalb der Schmelzrinne 2 vorgesehen sein, um den Ringspalt zwischen dem Formkörper 3 und dem Auslaufring 24 von oben her zu verschließen oder zu regulieren.

Wie dem Fachmann ohne weiteres ersichtlich sein wird, kann der Profilformungskörper 4 ein nahezu beliebiges Außenprofil aufweisen, sodass erfindungsgemäß eine große Vielzahl unterschiedlicher Glasrohre mit korrespondierenden runden oder nicht-runden Innenprofilen hergestellt werden können. Beispiele für solche Außenprofile sind der Deutschen Patentschrift DE 10 2004 018 148 B4 der Anmelderin zu entnehmen. In gewissen Fällen wird es erfindungsgemäß bevorzugt, wenn die Innenkontur des Auslaufrings 24, die Außenkontur des Formkörpers 3 und das Außenprofil des Profilformungskörpers 4 zueinander korrespondierend ausgebildet sind. Grundsätzlich kann jedoch das Außenprofil des Profilformungskörpers 4 auch von der Außenkontur des Formkörpers 3 abweichen. Beispielsweise kann die Außenkontur des Formkörpers 3 kreisrund sein, während das Außenprofil des Profilformungskörpers 4 dreieckig ausgebildet ist. Stets ist jedoch zur Erzielung gleichmäßiger Wandstärken des Glasrohres 5 (Fig. 2) auf eine konzentrische Anordnung von Formkörper 3 und Profilformungskörper 4 zu achten. Mit anderen Worten, die geometrischen Mittelpunkte von Formkörper 3 und Profilformungskörper 4 fluchten erfindungsgemäß auf einer Linie, die parallel zu der Abzugsrichtung der Glasschmelze bzw. des Glasrohres 5 verläuft, sodass sich symmetrische Bedingungen stromabwärts der Austrittsöffnung der Schmelzrinne 2 realisieren lassen.

Zum Ziehen eines kalibrierten runden oder profilierten Glasrohres wird wie folgt vorgegangen: Die Schmelzenzuführung bzw. Schmelzrinne 2 führt eine geeignet konditionierte Glasschmelze 6 zu. Durch Ändern der Höhenlage des Formkörpers 3 wird der Ringspalt zwischen den Formkörper 3 und dem Auslaufring 24 geeignet vorgegeben, sodass mit einer Abzugskraft F eine ausreichende Ziehgeschwindigkeit und eine ausreichende Wandstärke des Glasrohrs 5 erzielt werden kann. Der Profilformungskörper 4 wird unter einem geeigneten Abstand zu dem vorderen Ende des Formkörpers 3 angeordnet, so dass die aus der Austrittsöffnung 12 austretende bzw. abgezogene Glasschmelze 7 stromabwärts des Formkörpers 3 eine hohle Ziehzwiebel 50 ausbildet, deren Innenseite an dem unteren Teilabschnitt des Profilformungskörpers 4 in Anlage geraten, wie in der Fig. 2 dargestellt. Die Ziehzwiebel 50 ist jedenfalls an dem oberen Ende des Anlagebereichs 51 an dem Profilformungskörper 4 noch ausreichend weich und verformbar ist.

Beim weiteren Abziehen des Glasrohrs 5 schnürt sich die Ziehzwiebel 50 ein, bis schließlich an dem unteren Ende des Profilformungskörpers 4 die Innenseite der Ziehzwiebel 50 in Anlage zu den Außenoberflächen des Profilformungskörpers 4 gelangen. Der so ausgebildete Anlagebereich 51 mit konstantem Außenprofil erstreckt sich bevorzugt nicht über die gesamte Länge des Profilformungskörpers 4, sondern nur über eine gewisse Länge an dem unteren Teilabschnitt desselben. Durch die Anlage der Innenseite der Ziehzwiebel 50 an den Außenoberflächen des Profilformungskörpers 4 wird das Innenprofil des Glasrohrs 5 festgelegt. Beim weiteren Abziehen können die Außenwände des Glasrohrs 5 stromabwärts von dem Profilformungskörper 4 noch geringfügig weiter gestreckt werden, bis schließlich die Temperatur des Glasrohrs 5 auf eine Temperatur unterhalb des Erweichungspunktes (softening point) abgefallen ist. Mittels der Heizvorrichtung 25 lassen sich die Temperaturbedingungen stromabwärts der Austrittsöffnung der Schmelzrinne 2 zusätzlich kontrollieren.

Zum Verändern der Geometrie des Glasrohres 5 stehen bei diesem Verfahren insbesondere die folgenden Parameter zur Verfügung, die in einfacher Weise einzeln oder koordiniert geändert werden können: die Temperatur der Glasschmelze 6 in der Schmelzrinne 2 bzw. an der Austrittsöffnung 12 derselben; der Innendurchmesser der Austrittsöffnung 12 und der Außendurchmesser des Formkörpers 3; die Breite des Ringspaltes zwischen dem Formkörper 3 und dem Auslaufring 24; der Außendurchmesser und das Außenprofil des Profilformungskörpers 4; die Heizleistung der Heizvorrichtung 25; die Länge des Profilformungskörpers 4; der Abstand zwischen dem unteren Ende des Formkörpers 3 und dem oberen Ende des Profilformungskörpers 4 und der Durchsatz der Glasschmelze.

Zum Ziehen von Glasrohren werden die Temperaturbedingungen so eingestellt, dass die Viskosität der Glasschmelze im Bereich des Formkörpers 3 etwa in den Bereich von etwa 2 x 10⁴ bis 10⁶ dPas liegt und dass die Viskosität der Glasschmelze an dem unteren Ende des Profilformungskörpers 4 etwa 10⁶ dPas beträgt, jedenfalls aber kleiner als die Viskosität an dem Littleton-Punkt des Glases ist. Somit wird die Temperatur des Erweichungspunktes des Glases erst stromabwärts des Profilformungskörpers 4 unterschritten. Zu diesem Zweck können stromabwärts vom dem Profilformungskörper 4 Kühlvorrichtungen (nicht gezeigt) vorgesehen sein.

Wie der Fig. 2 ohne weiteres entnehmbar ist, wird die Wandstärke des Glasrohrs bei einem vorgegebenen Ringspalt im Wesentlichen durch den Durchsatz, die Temperatur und die Ziehgeschwindigkeit festgelegt. In gewissen Fällen kann vorgesehen sein, dass es stromabwärts von dem Profilformungskörper 4 zu einer geringen weiteren Verformung des Glasrohrs kommt, nämlich zu einer weiteren Streckung. Diese Bedingungen können in einfacher Weise, insbesondere durch die Temperatur und Ziehkraft, geeignet eingestellt werden, sodass das schlussendlich erzielbare Innenprofil und Außenprofil mit hoher Präzision vorgegeben werden kann. Bevorzugt werden jedoch die Temperaturbedingungen und die Position des Profilformungskörpers 4 so gewählt, dass es stromabwärts des Profilformungskörpers zu keiner Nachverformung des Glasrohrs mehr kommt.

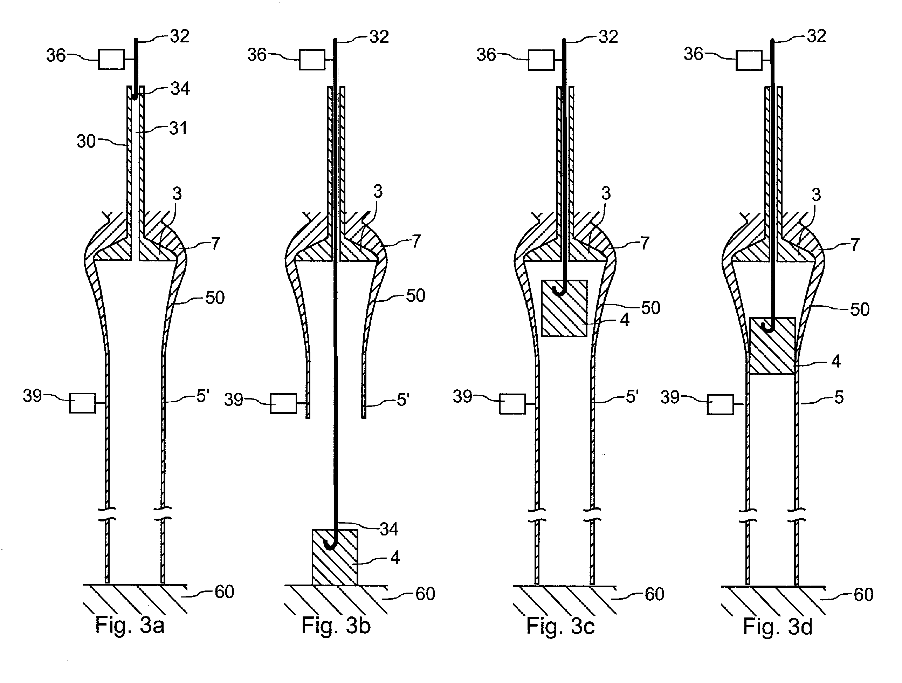

Zum Austauschen des Profilformungskörpers 4 durch einen Profilformungskörper mit einem anderen Außenprofil wird erfindungsgemäß vorgegangen, wie nachfolgend anhand der Fig. 3a bis 3d beschrieben. Aus Vereinfachungsgründen ist in den Fig. 3a bis 3d nur der eigentliche Formkörper 3 mit dem gerade in der Herstellung befindlichen Glasrohr 5' dargestellt, sind jedoch weitere Einzelheiten der Ziehvorrichtung im Wesentlichen weggelassen.

Dabei sei zunächst der Fall des erstmaligen Anordnens eines Profilformungskörpers in einer gewünschten Betriebslage beschrieben. Die Fig. 3a zeigt, wie ein Glasrohr 5' nach dem bekannten Vello- oder Down-Draw-Verfahren ohne Verwendung eines dem Formkörper 3 nachgeordneten Profilformungskörpers ausgebildet wird bzw. frei gezogen wird. Durch Wahl einer geeigneten Abzugsgeschwindigkeit und Öffnungsweite der Austrittsöffnung 12 (vgl. Fig. 2) wird die Ziehzwiebel 50 frei zu einem Glasrohr 5' abgezogen. Das Bezugszeichen 60 in der Fig. 3a bezeichnet dabei einen Kellerboden oder dergleichen unterhalb der Ziehvorrichtung, so dass den Fig. 3a bis 3d ein Down-Draw Verfahren zugrunde gelegt sein soll. Kurz bevor das vordere Ende des nachfließenden frei gezogenen Glasrohrs 5' den Kellerboden 60 erreicht, wird in einem Bereich unterhalb der Ziehzwiebel 50, in welchem das Glasrohr 5' bereits ausreichend abgekühlt ist, mittels der Schneidevorrichtung 39 ein Glasrohr 5' von dem nachfließenden Glasrohrstrang abgelängt und mittels einer nicht dargestellten Fördervorrichtung abtransportiert. Weiterhin wird das Glasrohr 5' kontinuierlich über den Formkörper 3 abgezogen.

Zum Setzen des Profilformungskörpers wird gemäß der Fig. 3a zunächst ein Gestänge oder Zugseil 32 mittels einer Höhenverstelleinrichtung 36 durch die Innenbohrung 31 des den Formkörper 3 tragenden Schafts 30 hindurch abgesenkt, bis das vordere Ende mit einem daran vorgesehenen Haken 34 gemäß der Fig. 3b den auf dem Kellerboden 60 zentriert zum Innenraum des nachfließenden Glasrohrs 5' positionierten Profilformungskörpers erreicht hat. In dieser Stellung wird der Profilformungskörper 4 mittels des Hakens 34 oder einer entsprechend ausgelegten Befestigungsvorrichtung mit dem Gestänge oder Zugseil 32 verbunden. Wie der Fig. 3b entnommen werden kann, durchragt das Gestänge oder Zugseil 32 den gesamten Innenraum der Ziehzwiebel 50 und des nachfließenden Glasrohrs 5' und erstreckt sich über das vordere Ende des Glasrohrs 5' hinaus bis zum Profilformungskörper 4. Der Abstand zwischen dem Formkörper 3 und dem schraffiert dargestellten Kellerboden 60 kann dabei mehrere Meter betragen, beispielsweise etwa 12 Meter, so dass bei typischen Abziehgeschwindigkeiten des frei gezogenen Glasrohrs 5' von wenigen Zentimetern pro Sekunde ausreichend Zeit zur geeigneten Positionierung des Profilformungskörpers 4 und zum Verbinden desselben mit dem Gestänge oder Zugseil 32 verbleibt, und zwar in einem Bereich, der ausreichend beabstandet zu dem noch heißen vorderen Ende des nachfließenden Glasrohrstrangs 5' ist.

Wie man der Fig. 3c entnehmen kann, wird das Gestänge oder Zugseil 32 anschließend mittels der Höhenverstelleinrichtung 36 erneut angehoben, um den Profilformungskörper 4 in den Innenraum des nachfließenden freigezogenen Glasrohrs 5' einzuführen, und zwar bis in den Bereich der Ziehzwiebel 50 hinein und bis zum Erreichen der gewünschten Betriebslage mit einem auf die jeweiligen Prozessparameter abgestimmten vorbestimmten Abstand zwischen Formkörper 3 und Profilformungskörper 4. Sofern ein Zugseil 32 zum Anheben des Profilformungskörpers 4 wird, wird dieser in der gewünschten Betriebslage dann mit einem ausreichend stabilen Gestänge verbunden, beispielsweise durch Umhängen des Profilformungskörpers 4, um diesen während des nachfolgenden Herstellungsprozesses ausreichend stabil gehalten zu werden.

Wie man der Fig. 3c entnehmen kann, ist, damit der Profilformungskörper 4 problemlos in den Innenraum des Glasrohrs 5' und der Ziehzwiebel eingeführt werden kann, eine maximale Außenabmessung des Profilformungskörpers 4 quer zur Abzugsrichtung des Glasrohrs 5', beispielsweise bei Zugrundelegung eines kreisrunden Außenprofils der maximale Durchmesser desselben, kleiner als eine entsprechende minimale Innenabmessung des freigezogenen Glasrohrs 5'quer zur Abzugsrichtung des Glasrohrs 5', beispielsweise die Öffnungsweite des Glasrohrs 5'. Dies wird durch Einstellung geeigneter Prozessparameter zum freien Ziehen des Glasrohrs 5' bewerkstelligt, insbesondere durch geeignete Vorgabe der Abzugsgeschwindigkeit des Glasrohrs 5', der Öffnungsweite der Austrittsöffnung 12 der Schmelzenzuführung 2 (vgl. Fig. 2), der Temperatur im Bereich der der Austrittsöffnung 12 unmittelbar nachgeordneten Heizmuffel 25, 26 (vgl. Fig. 2), ggf. weiterer Parameter. Ergänzend oder alternativ kann im Bereich der Heizmuffel 25, 26 eine Unterdruck-Erzeugungseinrichtung (nicht dargestellt) vorgesehen sein, um in diesem Bereich gezielt einen Unterdruck von außen her auf die Ziehzwiebel einwirken zu lassen, um diese und damit auch das nachfließende Glasrohr 5 geeignet aufzuweiten.

Nach Erreichen der gewünschten Betriebslage werden schließlich gemäß der Fig. 3d die Prozessparameter so gewählt, dass die Innenseite der Ziehzwiebel 50 in Anlage zur Außenoberfläche des Profilformungskörpers 4 gelangt, so dass das Innenprofil des dann geformten Glasrohrs 5 exakt dem Außenprofil des Profilformungskörpers 4 entspricht. Der weitere Prozess erfolgt entsprechend, wie in der deutschen Patentschrift DE 10 2004 018 148 B4 der Anmelderin offenbart, deren Inhalt hiermit im Wege der Bezugnahme ausdrücklich mit beinhaltet sei.

Kurz bevor das vordere Ende des nachfließenden Glasrohrs 5 mit dem vorgestimmten Innenprofil den schraffiert dargestellten Kellerboden erreicht, wird erneut ein Glasrohr 5 mit Hilfe der Schneidevorrichtung 39 abgelängt und seitlich abtransportiert.

Zum Austauschen eines gerade verwendeten Profilformungskörpers 4 durch einen anderen oder neuen Profilformungskörper wird erfindungsgemäß entsprechend vorgegangen. Zunächst wird hierzu der Profilformungskörper 4 durch Betätigen der Höhenverstelleinrichtung 36 aus dem Bereich der Ziehzwiebel 50 abwärts durch den Innenraum des Glasrohrs 5 abgesenkt, bis schließlich der Kellerboden 60 erreicht ist. In dieser Stellung hat der Profilformungskörper 4 den Innenraum des Glasrohrs 5 vollständig verlassen und ist dieser von außen her frei zugänglich, sodass der Profilformungskörper 4 nun problemlos von dem Gestänge oder Zugseil 32 getrennt und ausgetauscht werden kann. Hierzu wurde zuvor das nachfließende Glasrohr 5 geeignet abgelängt. Anschließend wird der neue Profilformungskörper 4 erneut in den Innenraum des nachfließenden Glasrohrs 5 und der Ziehzwiebel 50 eingeführt, wie vorstehend anhand der Fig. 3a bis 3d beschrieben. Vor dem Austausch des gerade verwendeten Profilformungskörpers 4 kann zuvor das Glasrohr 5 solange geeignet aufgeweitet werden, bis eine minimale Innenabmessung (Öffnungsweite) des nachfließenden Glasrohrs 5 quer zu dessen Abzugsrichtung größer ist als eine maximale Außenabmessung des Profilformungskörpers 4 quer zur Abzugsrichtung des Glasrohrs 5. Hierzu können in der vorstehend beschriebenen Weise die vorherrschenden Prozessparameter geeignet variiert und/oder im Bereich der Ziehzwiebel 50 ein geeigneter Unterdruck angelegt werden, wie vorstehend beschrieben.

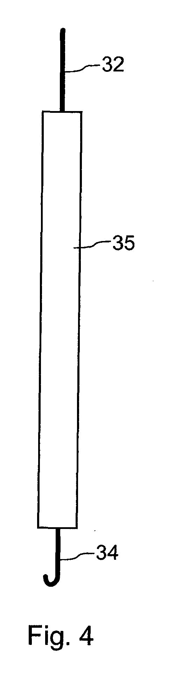

Die Fig. 4 zeigt das untere Ende des Gestänges oder Zugseils 32 gemäß einer weiteren Ausführungsform, an welchem oberhalb des Hakens bzw. Verbindungsabschnitts 34 ein Gewichtskörper 35 mit einer kleineren maximalen Außenabmessung als der an dem Haken bzw. Verbindungsabschnitt 34 zu befestigende Profilformungskörper vorgesehen ist. Dieser Gewichtskörper 35 dient einer Beschwerung des Gestänges oder Zugseils 32 und damit einer mechanischen Stabilisierung und Beruhigung des pendelartigen Systems. Selbstverständlich kann der Gewichtskörper 35 auch abgenommen werden, beispielsweise wenn der mit einem ausreichenden Eigengewicht versehene Profilformungskörper 4 schließlich an dem Haken bzw. Verbindungsabschnitt 34 befestigt ist.

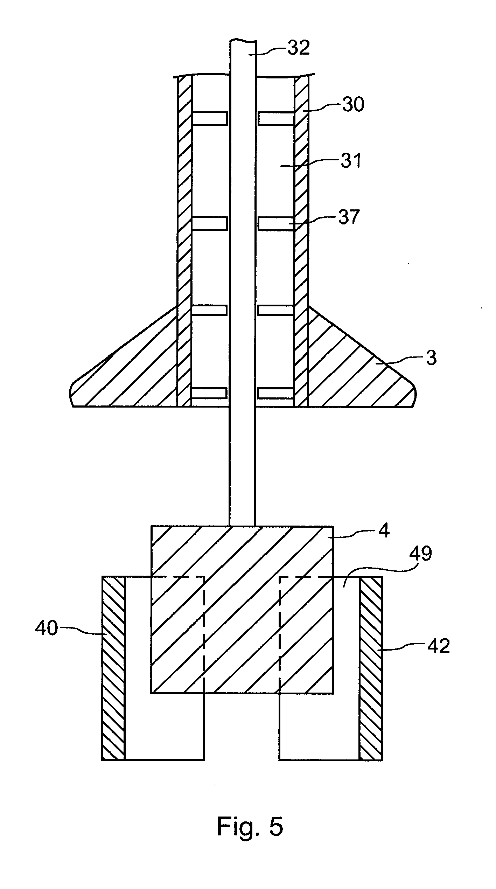

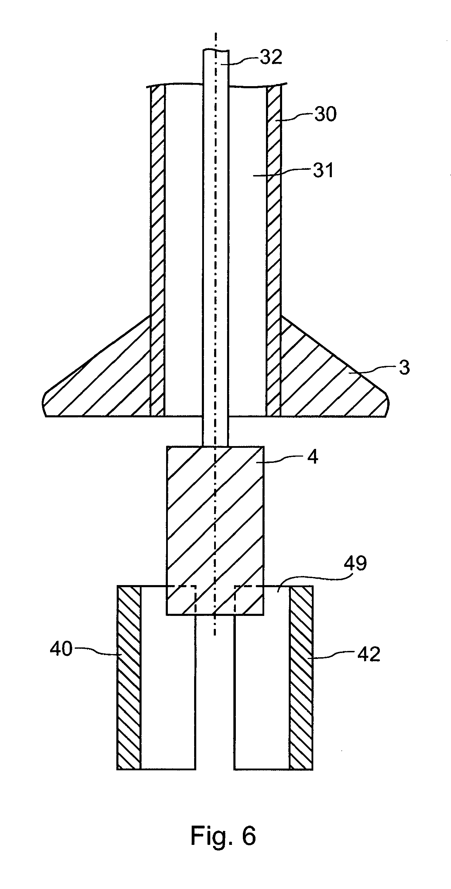

Anhand den Fig. 5 und 6 sollen nachfolgend weitere Einzelheiten des Formkörpers und der Positionierung des Profilformungskörpers beschrieben werden. Zur Zentrierung und Geradführung des Gestänges oder Zugseils 32 sind gemäß der Fig. 5 in der Innenbohrung 31 des den Formkörper 3 tragenden Schafts 30 eine Mehrzahl von Führungselementen 37 mit einer Innenbohrung beabstandet zueinander angeordnet, die auf das Profil des Gestänges oder Zugseils 32 abgestimmt sind, so dass das Gestänge oder Zugseil 32 von der Mehrzahl von Innenbohrungen geradgeführt ist, d.h. im Wesentlichen nur axial verstellbar ist, nicht jedoch in einer Richtung senkrecht zur Längsrichtung des Schafts 30. Die Bohrungen sind fluchtend und konzentrisch entlang der Mittelachse des Schafts 30 und der Innenbohrung 31 angeordnet, so dass dadurch auch eine Zentrierung des Gestänges oder Zugseils 32 und des daran befestigten Profilformungskörpers 4 erzielt wird. Aufgrund des im Vergleich zur Gesamtlänge des Schafts 30 vergleichsweise geringen Abstands zwischen dem Formkörper 3 und dem Profilformungskörper 4 in der gewünschten Betriebslage kann bereits diese Zentrierung für eine ausreichend stabile mechanische Positionierung des Profilformungskörpers 4 sorgen, so dass ein seitliches Spiel oder Wackeln desselben in der Betriebslage im Wesentlichen ausgeschlossen ist. Hierzu kann eine vorteilhaft hohe Eigensteifigkeit des Gestänges oder Zugseils 32 beitragen, insbesondere wenn kein Zugseil sondern stattdessen ein ausreichend stabiles Metallgestänge 32 verwendet wird.

Dennoch kann es zu einem Wackeln des Profilformungskörpers 4 in einer Richtung senkrecht zur Abzugsrichtung des Glasrohrs kommen. Um ein derartiges unerwünschtes seitliches Wackeln des Profilformungskörpers 4 zu unterbinden, sind gemäß der Fig. 5 zwei Gegenstücke 40, 42 beabstandet und unter Ausbildung eines Ringspalts 49 um den Profilformungskörper 4 herum angeordnet.

Die beiden Gegenstücke 40, 42 umgeben den Profilformungskörper 4 dabei halbschalenartig und weisen jeweils ein dem Außenprofil des Profilformungskörpers 4 entsprechendes Innenprofil auf, so dass die Breite des Spalts 49 in den Bereichen zwischen den Gegenstücken 40, 42 und dem mittig dazwischen befindlichen Profilformungskörper 4 konstant ist und der Wandstärke des herzustellenden Glasrohrs entspricht. Im Zusammenwirken des Profilformungskörpers 4 und der beiden Gegenstücke 40, 42 wird somit zusätzlich auch das Außenprofil des Glasrohrs mit geringen Toleranzen vorgegeben. Insgesamt wird so ein kalibriertes Glasrohr mit einem vorbestimmten Innenprofil und Außenprofil mit erfindungsgemäß sehr geringen Toleranzen ausgebildet.

Selbstverständlich können die Gegenstücke 40, 42 oder auch weitere nicht dargestellte Gegenstücke den Profilformungskörper 4 im Wesentlichen vollständig umgeben, um einen im Wesentlichen vollständig geschlossenen Ringspalt 49 auszubilden. Wie in der Fig. 5 dargestellt, sind die Gegenstücke 40, 42, in Abzugsrichtung des Glasrohrs betrachtet, stromabwärts von dem Profilformungskörper 4 angeordnet, so dass die Ziehzwiebel zunächst in Anlage zu dem oberen Abschnitt des Profilformungskörpers 4 gelangt und erst anschließend in den Ringspalt 49 zwischen Profilformungskörper 4 und den beiden Gegenstücken 40, 42 einläuft.

Wie dem Fachmann ohne Weiteres ersichtlich sein wird, wird im Zusammenwirken mit den Gegenstücken 40, 42, die bevorzugt konzentrisch bzw. symmetrisch zur Mittelachse des Schafts 30 angeordnet sind, die Positionierung des Profilformungskörpers 4 gegen ein seitliches Verwackeln weiter stabilisiert.

Die Fig. 6 zeigt eine weitere Ausführungsform, bei welcher der Profilformungskörper 4 eine kleinere maximale Außenabmessung aufweist als die minimale Innenabmessung der Innenbohrung 31 des den Formkörper 3 tragenden Schafts 30. Somit kann der Profilformungskörper 4 durch die Innenbohrung 31 hindurch in den Bereich der Ziehzwiebel (nicht dargestellt) abgesenkt werden, um die gewünschte Betriebslage einzunehmen. Auch bei der Ausführungsform gemäß der Fig. 6 sind um den Profilformungskörper 4 herum Gegenstücke 40, 42 zur Formung des Außenprofils des Glasrohrs angeordnet.

Wie dem Fachmann beim Studium der vorstehenden Beschreibung ohne weiteres ersichtlich sein wird, sind auch die Gegenstücke 40 und 42 aus einem geeignet hitzebeständigen Material ausgebildet, das auch bei hohen Temperaturen nicht von der Glasschmelze benetzt wird. Bevorzugt bestehen die Gegenstücke erfindungsgemäß aus einem polierten Graphit oder aus einem anderen nicht-silikatischen Material mit hexagonaler Kristallstruktur, beispielsweise Bornitrid. Um eine Riefenbildung auf der Außenseite des Glasrohrs zu vermeiden, können auch die Unterkanten der Gegenstücke angefast oder abgerundet sein. Ferner kann der Ringspalt 49 (vgl. Fig. 5) zwischen dem Profilformungskörper 4 und den Gegenstücken 40, 42, in Abzugsrichtung des Glasrohrs betrachtet, zumindest abschnittsweise verjüngt ausgebildet sein, um ein gleichmäßiges ungehindertes Einlaufen der Ziehzwiebel in den Bereich des Ringspalts 49 zu ermöglichen. Wie sich aus der vorstehenden Beschreibung ohne weiteres ergibt, wird die vorstehend beschriebene Vorgehensweise zum Setzen und/oder Austausch eines Profilformungskörpers ganz besonders bevorzugt bei einem Down-Draw-Verfahren verwendet.

### Bezugszeichenliste

- 1: Ziehvorrichtung
- 2: Schmelzenzuführung / Schmelzrinne
- 3: Formkörper / Zugnadel
- 4: Profilformungskörper
- 5: Profiliertes oder kalibriertes Glasrohr
- 5': frei gezogenes Glasrohr
- 6: Glasschmelze
- 7: Austretende Glasschmelze
- 12: Austrittsöffnung
- 20: Boden
- 21: Seitenwand
- 23: Öffnung
- 24: Auslaufring
- 25: Heizvorrichtung
- 26: Wärmeisolation
- 30: Formkörperschaft
- 31: Innenbohrung
- 32: Zuggestänge / Seil
- 33: Einlass für Prozessluft und/oder inertes Schutzgas
- 34: Haken / Befestigungsvorrichtung
- 35: Gewichtskörper
- 36: Höhenverstelleinrichtung
- 37: Führungselement
- 39: Schneidevorrichtung
- 40: Erstes Gegenstück
- 41: Erste Verstelleinrichtung
- 42: Zweites Gegenstück
- 43: Zweite Verstelleinrichtung
- 49: Spalt
- 50: Ziehzwiebel
- 51: Anlagebereich an Profilformungskörper 4
- 60: Kellerboden

- F: Zugkraft
- Z: Längsverstellung des Profilformungskörpers

### Zum Stand der Technik:

- 100: Ziehvorrichtung
- 102: Schmelzenzuführung / Schmelzrinne
- 103: Formkörper / Zugnadel
- 104: Profilformungskörper
- 105: Profiliertes oder kalibriertes Glasrohr
- 106: Glasschmelze
- 107: Austretende Glasschmelze
- 112: Austrittsöffnung
- 120: Boden
- 121: Seitenwand
- 122: Obere Abdeckung
- 123: Öffnung
- 124: Auslaufring
- 125: Heizvorrichtung
- 126: Wärmeisolation
- 130: Formkörperschaft
- 131: Innenbohrung
- 132: Profilformungskörper-Schaft / Gestänge
- 133: Einlass für Prozessluft und/oder inertes Schutzgas
- 150: Ziehzwiebel

## Patentansprüche

1. Verfahren zur Herstellung von Glasrohren mit einem vorbestimmten Innenprofil, bei welchem Verfahren
eine Glasschmelze (6) aus einer Austrittsöffnung (12) einer Schmelzenzuführung (2) austritt und über einen Formkörper (3) unter Ausbildung einer hohlen Ziehzwiebel (50) abgezogen wird, und
die Ziehzwiebel (50) über einen dem Formkörper (3) nachgeordneten Profilformungskörper (4) gezogen wird, so dass eine Innenoberfläche der Ziehzwiebel in Anlage zur Außenoberfläche des Profilformungskörpers (4) zu einem dem Profil der Außenfläche entsprechenden vorbestimmten Innenprofil ausgebildet wird, um ein Glasrohr (5; 5') mit dem vorbestimmten Innenprofil auszubilden, wobei
zum erstmaligen Anordnen des Profilformungskörpers (4) in einer Betriebslage innerhalb der Ziehzwiebel (50) oder zum Anordnen des Profilformungskörpers (4) in der Betriebslage innerhalb der Ziehzwiebel (50) nach einem Austauschen eines zuvor verwendeten Profilformungskörpers (4)
a) entweder das Glasrohr (5; 5') mittels einer in einem Bereich unterhalb der Ziehzwiebel befindlichen Schneidevorrichtung (39), in welchem das Glasrohr ausreichend abgekühlt ist, abgelängt wird, um einen frei zugänglichen Bereich unterhalb des Formkörpers (3) zu schaffen, und der Profilformungskörper (4) von unterhalb des Formkörpers (3) her durch den Innenraum des Glasrohrs(5; 5') hindurch bis zum Erreichen der Betriebslage axial verfahren wird,
b) oder der Profilformungskörper (4) durch eine Innenbohrung (31) eines den Formkörper haltenden Schafts (30) hindurch bis zum Erreichen der Betriebslage in den Innenraum des Glasrohrs (5; 5`) axial verfahren wird.

2. Verfahren nach Anspruch 1, wobei die Glasschmelze kontinuierlich aus der Austrittsöffnung abgezogen wird, während der Profilformungskörper (4) von unterhalb des Formkörpers her durch den Innenraum des Glasrohrs hindurch oder durch eine Innenbohrung des den Formkörper (3) haltenden Schafts hindurch bis zum Erreichen der Betriebslage in den Innenraum des Glasrohrs axial verfahren wird.

3. Verfahren nach einem der vorhergehenden Ansprüche, wobei das Glasrohr (5) und/oder die Ziehzwiebel (50) aufgeweitet wird bzw. werden, bis eine minimale Innenabmessung des Glasrohrs quer zur Abzugsrichtung des Glasrohrs größer ist als eine maximale Außenabmessung des Profilformungskörpers (4) quer zur Abzugsrichtung des Glasrohrs, bevor dieser in den Innenraum des Glasrohrs (5, 5') axial verfahren wird.

4. Verfahren nach Anspruch 3, wobei zum Aufweiten des Glasrohrs ein Unterdruck von einer Außenseite her im Bereich der Ziehzwiebel (50) erzeugt wird, bevorzugt innerhalb einer der Austrittsöffnung (12) unmittelbar nachgeordneten Heizmuffel (25, 26), welche die Ziehzwiebel umgibt.

5. Verfahren nach einem der vorhergehenden Ansprüche, wobei der Profilformungskörper (4) in dem frei zugänglichen Bereich unterhalb des Formkörpers (3) angeordnet oder positioniert und mit einem Gestänge oder Zugseil (32) verbunden wird, um anschließend in den Innenraum des Glasrohrs eingeführt und in die Betriebslage verfahren zu werden.

6. Verfahren nach Anspruch 5, wobei das Gestänge oder Zugseil (32) durch die Innenbohrung (31) des Schafts (31) und die Ziehzwiebel (50) hindurch bis zum Profilformungskörper (4) abgesenkt wird, um diesen anschließend in die Betriebslage anzuheben, oder wobei das Gestänge den Profilformungskörper (4) von unterhalb des Profilformungskörpers (4) her in den Innenraum des Glasrohrs einführt und bis in die Betriebslage anhebt.

7. Verfahren nach einem der Ansprüche 1 bis 4, wobei das Gestänge oder Zugseil (32) gemeinsam mit dem Profilformungskörper (4) durch die Innenbohrung (31) des Schafts (30) und die Ziehzwiebel (50) hindurch bis in die Betriebslage abgesenkt wird.

8. Verfahren nach einem der Ansprüche 5 bis 7, wobei der Profilformungskörper (4) abnehmbar mit dem Gestänge oder Zugseil (32) verbunden ist und/oder drehstarr relativ zu dem Formkörper (3) und der Austrittsöffnung (12) gehalten oder geführt ist, wenn dieser in der Betriebslage gehalten ist oder in die Betriebslage geführt wird.

9. Verfahren nach einem der vorhergehenden Ansprüche, wobei in der Betriebslage zumindest zwei Profilformungskörper-Gegenstücke (40, 42) beabstandet und unter Ausbildung eines Spalts (49) um den Profilformungskörper (4) herum angeordnet sind, um das Außenprofil des Glasrohrs zu formen.

10. Vorrichtung zur Herstellung von Glasrohren mit einem vorbestimmten Innenprofil, umfassend eine Schmelzenzuführung (2) mit einer Ausbittsöffnung (12) für eine Glasschmelze (6), einen Formkörper (3) und einen dem Formkörper nachgeordneten Profilformungskörper (4), wobei eine Ziehvorrichtung (F) vorgesehen ist, um die Glasschmelze aus der Austrittsöffnung und über den Formkörper zu ziehen, so dass eine Innenoberfläche einer Ziehzwiebel in Anlage zur Außenoberfläche des Profilformungskörpers (4) zu einem dem Profil der Außenoberfläche entsprechenden vorbestimmten Innenprofil ausgebildet wird, um ein Glasrohr (5; 5`) mit dem vorbestimmten Innenprofil auszubilden,
**dadurch gekennzeichnet, dass** eine Steuereinrichtung zum Steuern des Verfahrensvorgesehen ist, die so ausgelegt ist, dass zum erstmaligen Anordnen des Profilformungskörpers (4) in einer Betriebslage innerhalb der Ziehzwiebel oder zum Anordnen des Profilformungskörpers (4) in der Betriebslage innerhalb der Ziehzwiebel nach einem Austauschen eines zuvor verwendeten Profilformungskörpers (4)
a) entweder das Glasrohr (5; 5') mittels einer Schneidevorrichtung. (39) abgelängt wird, um einen frei zugänglichen Bereich unterhalb des Formkörpers (3) zu schaffen, und der Profilformungskörper (4) von unterhalb des Formkörpers (3) her durch den Innenraum des Glasrohrs (5; 5') hindurch bis zum Erreichen der Betriebslage axial verfahren wird, wobei die Schneidevorrichtung (39) in einem Bereich unterhalb der Ziehzwiebel angeordnet ist,
b) oder der Profilformungskörper (4) durch eine Innenbohrung (31) eines den Formkörper haltenden Schafts (30) hindurch bis zum Erreichen der Betriebslage in den Innenraum des Glasrohrs (5; 5') axial verfahren wird.

## Claims

1. A method for manufacturing glass tubes having a predetermined inner profile, in which method:
molten glass (6) emerges from an outlet orifice (12) of a melt feed and is drawn over a shaping body (3) so as to form a hollow drawing bulb (50), and
the drawing bulb (50) is drawn over a profile forming body (4) positioned downstream of the shaping body (3) so that an inner circumferential surface of the drawing bulb is deformed whilst abutting against outer surfaces of the profile forming body (4) to form the predetermined inner profile corresponding to the profile of said outer surfaces for forming a glass tube (5; 5') having said predetermined inner profile, wherein
for disposing the profile forming body (4) in a desired operational position within the drawing bulb (50) for the first time or for disposing the profile forming body (4) in the desired operational position within the drawing bulb (50) after replacing a profile forming body (4) previously used
a) either said glass tube (5; 5') is severed using a severing device (39) disposed in a region below the drawing bulb, in which said glass tube has cooled down sufficiently, for providing a region with free access below the shaping body (3) and the profile forming body (4) is displaced in axial direction from below the shaping body (3) via the inner space of the glass tube (5; 5') until reaching said operational position,
b) or said profile forming body (4) is moved via an inner bore (31) of a shaft (30) supporting said shaping body until reaching said operational position in the inner space of said glass tube (5; 5').

2. The method according to claim 1, wherein the molten glass is drawn continuously from the outlet orifice while said profile forming body (4) is moved in axial direction from below the shaping body (3) via the inner space of the glass tube (5; 5') or via an inner bore of the shaft supporting said shaping body (3) until reaching said operational position in the inner space of said glass tube.

3. The method according to any of the preceding claims, wherein said glass tube (5) and/or said drawing bulb (50) is widened until a minimum inner dimension of the glass tube transverse to a direction of drawing said glass tube is larger than a maximum outer dimension of said profile forming body (4) transverse to a direction of drawing said glass tube, before it is moved into the inner space of the glass tube (5, 5') in axial direction.

4. The method according to claim 3, wherein a negative pressure is generated in the region of said drawing bulb (50) from an outer side thereof for widening said glass tube, preferably within a heating muffle (25, 26) which is disposed directly downstream from said outlet orifice (12) and surrounds said drawing bulb.

5. The method according to any of the preceding claims, wherein said profile forming body (4) is set or positioned in said region with free access below the shaping body (3) and coupled to a rod or cable (32) to be inserted into the inner space of the glass tube and moved to said operational position subsequently.

6. The method according to claim 5, wherein said rod or cable (32) is lowered via said inner bore (31) of said shaft (30) and via said drawing bulb (50) towards said profile forming body (4) to raise it towards said operational position subsequently, or wherein said rod or cable raises said profile forming body (4) from below the shaping body (3) into the inner space of the glass tube until reaching said operational position.

7. The method according to any of claims 1 to 4, wherein said rod or cable (32) is lowered together with said profile forming body (4) via the inner bore (31) of the shaft (30) and the drawing bulb (50) until reaching said operational position.

8. The method according to any of claims 5 to 7, wherein said profile forming body (4) is releasably coupled with the rod or cable (32) and/or is supported or guided in a rotationally fixed manner relative to said shaping body (3) and the outlet orifice (12), when it is held in said operational position or guided towards said operational position.

9. The method according to any of the preceding claims, wherein at least two counter members (40, 42) are positioned spaced apart from and around said profile forming body (4) to form a gap (49) in said operational position for forming the outer profile of said glass tube.

10. An apparatus for manufacturing glass tubes having a predetermined inner profile, comprising a melt feed (2) with an outlet orifice (12) for molten glass (6), a shaping body (3) and a profile forming body (4) downstream of said shaping body, wherein a drawing device (F) is provided for drawing the molten glass from the outlet orifice and over said shaping body so that an inner circumferential surface of the drawing bulb is deformed whilst abutting against outer surfaces of the profile forming body (4) to form the predetermined inner profile corresponding to the profile of said outer surfaces for forming a glass tube (5; 5') having said predetermined inner profile
**characterized in that** a controlling means is provided for controlling said process, which is configured such that for disposing the profile forming body (4) in a desired operational position within the drawing bulb (50) for the first time or for disposing the profile forming body (4) in the desired operational position within the drawing bulb (50) after replacing a profile forming body (4) previously used
a) either said glass tube (5; 5') is severed using a severing device (39) for providing a region with free access below the shaping body (3) and the profile forming body (4) is displaced in axial direction from below the shaping body (3) via the inner space of the glass tube (5; 5') until reaching said operational position, wherein the severing device (39) is disposed in a region below the drawing bulb,
b) or said profile forming body (4) is moved via an inner bore (31) of a shaft (30) supporting said shaping body until reaching said operational position in the inner space of said glass tube (5; 5').

## Revendications

1. Procédé de fabrication de tubes de verre à profil intérieur prédéterminé, procédé selon lequel
du verre en fusion (6) sort par une ouverture de sortie (12) d'un dispositif d'alimentation de matière en fusion (2) et est étiré en passant sur un corps moulé (3), en formant un bulbe d'étirage (50) creux, et
le bulbe d'étirage (50) est étiré sur un corps de formage de profil (4) disposé à la suite du corps moulé (3), de sorte qu'une surface intérieure du bulbe d'étirage est formée en application contre la surface extérieure du corps de formage de profil (4), pour obtenir un profil intérieur prédéterminé correspondant au profil de la surface extérieure, en vue de former un tube de verre (5; 5') avec le profil intérieur prédéterminé, sachant que
pour la première mise en place du corps de formage de profil (4) dans une position de service à l'intérieur du bulbe d'étirage (50), ou pour la mise en place du corps de formage de profil (4) dans la position de service à l'intérieur du bulbe d'étirage (50), après le remplacement d'un corps de formage de profil (4) utilisé auparavant,
a) soit le tube de verre (5; 5') est coupé à longueur au moyen d'un dispositif de coupe (39) se trouvant dans une région située sous le bulbe d'étirage, dans laquelle le tube de verre est suffisamment refroidi, afin de créer une zone librement accessible sous le corps moulé (3), et le corps de formage de profil (4) est déplacé axialement depuis en dessous du corps moulé (3), à travers l'intérieur du tube de verre (5; 5'), jusqu'à atteindre la position de service,
b) soit le corps de formage de profil (4) est déplacé axialement à travers un alésage (31) d'une tige (30) tenant le corps moulé, pour entrer à l'intérieur du tube de verre (5; 5'), jusqu'à atteindre la position de service.

2. Procédé selon la revendication 1, selon lequel le verre en fusion est étiré en continu à partir de l'ouverture de sortie, pendant que le corps de formage de profil (4) est déplacé axialement depuis en dessous du corps moulé, à travers l'intérieur du tube de verre ou à travers un alésage d'une tige tenant le corps moulé (3), pour entrer à l'intérieur du tube de verre, jusqu'à atteindre la position de service.

3. Procédé selon l'une des revendications précédentes, selon lequel le tube de verre (5) et/ou le bulbe d'étirage (50) est/sont élargi(s) jusqu'à ce qu'une dimension intérieure minimale du tube de verre, perpendiculairement au sens d'étirage du tube de verre, soit plus grande qu'une dimension extérieure maximale du corps de formage de profil (4), perpendiculairement au sens d'étirage du tube de verre, avant qu'il ne soit déplacé axialement pour entrer à l'intérieur du tube de verre (5; 5').

4. Procédé selon la revendication 3, selon lequel, pour élargir le tube de verre, une dépression est produite depuis une face extérieure dans la région du bulbe d'étirage (50), de préférence dans un moufle de chauffage (25, 26) qui est placé directement après l'ouverture de sortie (12) et entoure le bulbe d'étirage.

5. Procédé selon l'une des revendications précédentes, selon lequel le corps de formage de profil (4) est disposé ou positionné dans la zone librement accessible, située en dessous du corps moulé (3), et est relié à un système de tringles ou à un câble tracteur (32) pour être ensuite inséré à l'intérieur du tube de verre et être amené dans la position de service.

6. Procédé selon la revendication 5, selon lequel le système de tringles ou le câble tracteur (32) est abaissé à travers l'alésage (31) de la tige (31) et le bulbe d'étirage (50), jusqu'au corps de formage de profil (4), afin de soulever celui-ci ensuite jusque dans la position de service, ou selon lequel le système de tringles insère le corps de formage de profil (4) à l'intérieur du tube de verre, depuis en dessous du corps de formage de profil (4), et le soulève jusque dans la position de service.

7. Procédé selon l'une des revendications 1 à 4, selon lequel le système de tringles ou le câble tracteur (32) est abaissé conjointement avec le corps de formage de profil (4) jusque dans la position de service, à travers l'alésage (31) de la tige (30) et le bulbe d'étirage (50).

8. Procédé selon l'une des revendications 5 à 7, selon lequel le corps de formage de profil (4) est relié de façon amovible au système de tringles ou au câble tracteur (32) et/ou est maintenu ou guidé de façon rigide en rotation par rapport au corps moulé (3) et à l'ouverture de sortie (12), lorsqu'il est maintenu dans la position de service ou est amené dans la position de service.

9. Procédé selon l'une des revendications précédentes, selon lequel, dans la position de service, au moins deux pièces conjuguées de corps de formage de profil (40, 42) sont disposées à distance autour du corps de formage de profil (4), en créant un interstice (49), pour former le profil extérieur du tube de verre.

10. Dispositif de fabrication de tubes de verre à profil intérieur prédéterminé, comprenant un dispositif d'alimentation de matière en fusion (2) doté d'une ouverture de sortie (12) pour un verre en fusion (6), un corps moulé (3) et un corps de formage de profil (4) disposé à la suite du corps moulé (3), un dispositif d'étirage (F) étant prévu pour étirer le verre en fusion à partir de l'ouverture de sortie, en lé faisant passer sur le corps moulé, de sorte qu'une surface intérieure d'un bulbe d'étirage est formée en application contre la surface extérieure du corps de formage de profil (4), pour obtenir un profil intérieur prédéterminé correspondant au profil de la surface extérieure, en vue de former un tube de verre (5; 5') avec le profil intérieur prédéterminé,
**caractérisé en ce qu'**il est prévu un dispositif de commande qui est destiné à commander le procédé et est conçu de manière telle que pour la première mise en place du corps de formage de profil (4) dans une position de service à l'intérieur du bulbe d'étirage, ou pour la mise en place du corps de formage de profil (4) dans la position de service à l'intérieur du bulbe d'étirage, après le remplacement d'un corps de formage de profil (4) utilisé auparavant,
a) soit le tube de verre (5; 5') est coupé à longueur au moyen d'un dispositif de coupe (39) afin de créer une zone librement accessible sous le corps moulé (3), et le corps de formage de profil (4) est déplacé axialement depuis en dessous du corps moulé (3), à travers l'intérieur du tube de verre (5; 5'), jusqu'à atteindre la position de service, le dispositif de coupe (39) se trouvant dans une région située sous le bulbe d'étirage,
b) soit le corps de formage de profil (4) est déplacé axialement à travers un alésage (31) d'une tige (30) tenant le corps moulé, pour entrer à l'intérieur du tube de verre (5; 5'), jusqu'à atteindre la position de service.
